# FASCICULE DE BREVET EUROPEEN

(11) **EP 0 887 395 B1**
(45) Date de publication et mention de la délivrance du brevet: **28.09.2005**
(21) Numéro de dépôt: 98401540.4
(22) Date de dépôt: 23.06.1998
(51) Int. Cl.: C09K 3/18, B01D 12/00, F26B 5/00

(54) **Mélange pour le séchage de solides par déplacement d'eau et procédé correspondant**
Zusammensetzung zum Trocknen von Feststoffen durch Versetzung von Wasser und Verfahren
Composition for drying solids by displacement of water and corresponding process

(30) Priorité: 24.06.1997 FR 9707830
(43) Date de publication de la demande: 30.12.1998
(73) Titulaire: Promosol S.A., 94363 Bry sur Marne Cedex (FR)
(72) Inventeur: Duchi, Patrick, 1170 Aubonne (CH); Micozzi, Joseph, 94363 Bry sur Marne (FR)
(74) Mandataire: Bloch, Gérard

(56) Documents cités:
- EP-A- 0 673 996
- WO-A-93/10877
- WO-A-96/12571
- DATABASE WPI Section Ch, Week 9423 Derwent Publications Ltd., London, GB; Class A97, AN 94-186550 XP002057402 & JP 06 122898 A (OLYMPUS OPTICAL CO LTD) , 6 mai 1994

## Description

Lors de la fabrication en série de nombreux types d'objets, il faut souvent nettoyer et sécher ceux-ci en fin de chaîne de fabrication. On peut par exemple songer à des pièces optiques, mécaniques ou autres. Les opérations de nettoyage se terminent par un lavage et rinçage à l'eau, mais il faut ensuite éliminer les gouttelettes d'eau qui restent accrochées en surface, afin d'éviter la formation d'oxyde et de dépôts d'impuretés ou de traces qui se produirait si l'eau n'était pas éliminée ou simplement éliminée par évaporation.

Pour limiter les coûts dé main-d'oeuvre, on utilise―des machines de séchage dans lesquelles les objets sont immergés dans un bain d'un produit qui décolle les gouttelettes d'eau de la surface des objets.

Ce produit présente une faible tension superficielle, si bien qu'il s'étend par mouillage sur toute la surface des objets et décolle ainsi les gouttelettes d'eau accrochées à celle-ci. Les gouttelettes montent ensuite à la surface du bain, de par la différence de densité, où elles sont éliminées mécaniquement.

Les.produits utilisés jusqu'à ce jour pour cette opération de séchage présentent l'inconvénient d'être des produits chlorés ou chlorofluorocarbonés du type CFC-113 avec l'adjonction d'un tensio-actif à effet hydrofuge. C'est le solvant qui, devenu plus mouillant par la présence du tensio-actif, déplace l'eau en la décollant de l'objet et sans la dissoudre.

Or, l'emploi des chlorofluorocarbones est aujourd'hui interdite pour préserver la couche d'ozone. La demanderesse a donc cherché à formuler un nouveau bain exempt de CFC ou de HCFC.

La demanderesse a remplacé les solvants ci-dessus par des nouveaux produits, les HFEs, hydrofluoroéthers, ayant montré d'excellentes compatibilités avec l'environnement. Les molécules contiennent des atomes de fluor accrochés à des atomes de carbone avec un radical éther, et non plus des atomes de chlore sur les atomes de carbone. Cependant, de par l'absence de chlore, les molécules des solvants sont pratiquement inertes pour le but visé et il a donc fallu prévoir un additif pouvant se dissoudre dans ces solvants, sans toutefois favoriser la dissolution de l'eau dans ces derniers. Une série d'essais avec des tensio-actifs usuels, du type ester de phosphate, a été infructueuse.

La demanderesse a alors songé, comme additif au HEE, à un silicone copolymère ayant une ou plusieurs fonctions hydrophiles. C'est alors cet additif qui, soluble dans les HFEs très mouillants, exerce la fonction principale du mélange, en enveloppant les gouttelettes d'eau par hydrophilie et en permettant ainsi au solvant de les déplacer de la surface, les décollant de l'objet. Le HFE a ensuite un effet mécanique pour entraîner en surface les gouttelettes d'eau ainsi décollées. L'hydrophilie du silicone copolymère, associée à la densité du solvant différente de celle de l'eau, permet d'obtenir un mélange hydrofugeant.

Des essais complémentaires ont montré que des additifs de la famille des silicones copolymères, pour un mélange avec des molécules autres que les HFEs, convenaient également pour des solvants halogénés et hydro-halogénés.

C'est ainsi que l'invention concerne un mélange selon la revendication 1.

Un tel mélange se distingue de ceux enseignés par WO-A-96/12577 et procure des résultats positifs présentés dans la description ci-après.

Le mélange de l'invention peut remplacer directement les bains de CFC dans les appareils existants et ainsi reconvertir ceux-ci en appareils non polluants en regard de la couche d'ozone. Comme ses constituants sont commercialement disponibles, il ne présente pas de difficulté d'approvisionnement.

L'invention concerne aussi un procédé de séchage d'un solide par déplacement d'un liquide, dans lequel on immerge le solide dans un bain d'un premier produit solvant à ébullition agencé pour s'interposer entre le liquide et la surface du corps à laquelle il s'accroche, et on commande cette interposition au moyen d'un produit ayant une fonction hydrophile vis-à-vis du liquide.

On va maintenant décrire un exemple préféré de formulation du mélange formant un bain de séchage d'un corps solide qui y est immergé.

On utilise ici comme solvant, ou dispersant, un hydrofluoréther, portant dans le commerce la référence HFE-7100 et commercialisé par la société 3 M; c'est un liquide de densité voisine de 1,5 qu'on utilise à sa température d'ébullition (60°C). Par différence de densité, les gouttelettes d'eau, après détachement, sont repoussées vers la surface du bain.

L'accès du solvant HFE à la surface d'accrochage des gouttelettes d'eau au corps solide est facilité par adjonction d'un additif silicone copolymère ayant une ou plusieurs fonctions hydrophiles. Celui-ci s'accroche sur la surface déjà accessible des gouttelettes d'eau et, en outre, migre par mouillage sur la surface de celles-ci par laquelle elles s'accrochent au corps, c'est-à-dire que le silicone copolymère se substitue à la surface d'accrochage du corps à sécher et ainsi l'en décolle et l'intègre dans le bain. Ainsi, on immerge le solide dans un bain d'un produit agencé pour s'interposer entre le liquide et la surface du corps à laquelle il s'accroche et on commande cette interposition au moyen d'un produit ayant une fonction mouillante vis-à-vis du liquide, ici l'eau. La gouttelette, ainsi enveloppée par le silicone copolymère qui baigne dans le solvant HFE, subit une force verticale de par la différence des densités et se trouve ainsi repoussée en surface du mélange puisque, dans cet exemple, c'est ce dernier qui présente la densité la plus élevée. Une agitation de celui-ci permet aussi d'écarter les gouttelettes et de libérer celles qui seraient emprisonnées sous le corps à sécher.

Le silicone copolymère est un polydiméthylsiloxane modifié polyalkylèneoxide de formule 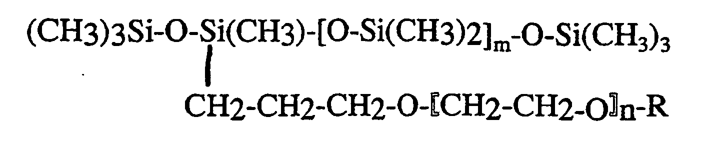 avec 0 ≤ m ≤ 100,
4 ≤ n ≤ 50 et
R étant un radical choisi dans le groupe de radicaux constitué par un atome d'hydrogène, un groupe alcool, un groupe amine et un groupe polyalkyl contenant 1 à 5 atomes de carbone.

Pour m égal à 0, la molécule est un heptaméthyltrisiloxane modifié polyalkylèneoxide et, pour m supérieur à 100, la molécule de polydiméthylsiloxane modifiée polyalkylène est pratiquement insoluble dans le solvant.

Pour n inférieur à 4, le pouvoir hydrophile, exercé sur la surface des gouttelettes d'eau, est limité et ne donne plus de résultats satisfaisants. Pour n dépassant 50, la solubilité dans le solvant devient trop faible et l'hydrophilie trop forte.

Les valeurs préférées de n vont de 6 à 10.

La masse moléculaire de ce silicone copolymère est de 400 à 1000 g/mole possédant au moins 25 % en poids de silicone ou de polydiméthylsiloxane.

La proportion de silicone copolymère peut varier dans une large mesure. Le seuil minimum d'efficacité est de 0,02 % en poids, rapporté au poids du mélange, un seuil maximal de 10 %, en poids, du mélange correspondant à un gaspillage du silicone copolymère. De préférence, cette proportion est comprise entre 0,04 % et 1 % et, de façon encore plus préférée, entre 0,1 à 0,4 %, en poids, du mélange. Des essais de séchage effectués avec l'additif à une concentration de 0,02 jusqu'à 0,2 % en poids avec le HFE-7100, hydrofluoroéther ou nonafluorobutyl-méthyléther ont démontré une élimination de gouttelettes d'eau sans laisser de traces.

Dans cet exemple, le mélange de solvant HFE et de silicone copolymère comporte en outre un autre solvant pour ce dernier. Cet autre solvant peut être un alcane, un siloxane, un alcool ou encore un aromatique que l'on mélange d'abord avec le silicone copolymère, par exemple à poids égaux, avant d'ajouter le HFE.

D'une façon plus générale, les HFEs et hydrofluoroéthers peuvent être remplacés par tout solvant halogéné, de préférence de densité différente de celle de l'eau. On citera par exemple les solvants fluorés et aussi les chlorofluorés, hydrofluorés (HFC) ou hydrochlorofluorés (HCFC). Les solvants contenant du chlore présentent l'inconvénient, par rapport aux nouveaux solvants tels que les hydrofluoroéthers (HFEs) et les hydrofluorés (HFC) d'agresser les corps à sécher en matières plastiques ou en élastomères.

Des essais de séchage effectués avec l'additif silicone copolymère à une concentration de 0,02 % en poids avec le HFC-4310mee ou le 2,3-dihydrodécafluoropentane ont démontré l'élimination parfaite de l'eau sans laisser de traces. De la même manière, des essais de séchage effectués avec cet additif à une concentration de 0,05 % en poids avec le HFC-4310mee ont démontré une élimination parfaite de l'eau sans laisser de traces.

## Revendications

1. Mélange hydrofugeant i) d'un dispersant halogéné hydrofluoroether choisi dans le groupe constitué par une molécule totalement halogénée et une molécule partiellement halogénée avec au moins un atome d'hydrogène et ii) d'un silicone copolymère ayant une fonction hydrophile, pour sécher des solides par déplacement d' eau, le silicone copolymère étant un polydiméthylsiloxane modifié polyalkylèneoxide de formule : 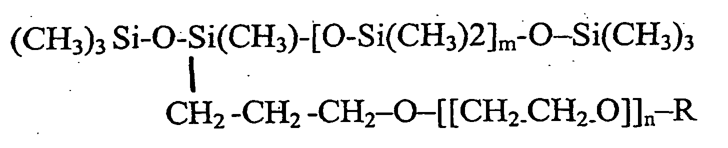 avec 0 ≤ m ≤ 100,
4 ≤ n ≤ 50 et
R étant un radical choisi dans le groupe de radicaux constitué par un atome d'hydrogène, un groupe alcool, un groupe amine et un groupe polyalkyl contenant 1 à 5 atomes de carbone.

2. Mélange selon la revendication 1, comportant en outre un co-solvant choisi dans le groupe constitué par l'alcane, le siloxane, un alcool et un aromatique comme solvant du silicone.

3. Mélange selon l'une des revendications 1 et 2, dans lequel le silicone représente 0,02 à 10 % en poids du total du mélange.

4. Mélange selon la revendication 3, dans lequel le silicone représente 0,04 à 1 % en poids du total du mélange.

5. Mélange selon la revendication 3, dans lequel le silicone représente 0,1 à 0,4 % en poids du total du mélange.

6. Mélange selon la revendication 1, comportant en outre un co-solvant hydrofluoré.

## Patentansprüche

1. Wasserabweisendes Gemisch aus i) einem halogenisierten Hydrofluorether-Dispersionsmittel, das aus der Gruppe ausgewählt ist, die aus einem vollständig halogenisierten Molekül und einem teilweise halogenisierten Molekül mit mindestens einem Wasserstoffatom besteht, und ii) einem Siliconcopolymer mit einer hydrophilen Wirkung, um Feststoffe durch Verdrängung von Wasser zu trocknen, wobei das Siliconcopolymer ein mit Polydimethylsiloxan modifiziertes Polyalkylenoxid mit der Formel 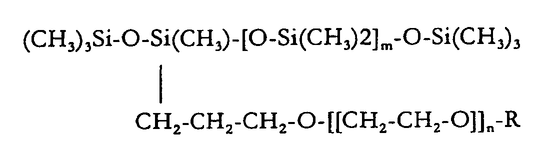 ist,
wobei 0 ≤ m ≤ 100,
4 ≤ n ≤ 50, und
R ein Radikal ist, das aus der Radikalengruppe ausgewählt ist, die aus einem Wasserstoffatom, einer Alkoholgruppe, einer Amingruppe und einer Polyalkylgruppe besteht, die 1 bis 5 Kohlenstoffatome enthält.

2. Gemisch nach Anspruch 1, darüber hinaus ein zusätzliches Lösungsmittel umfassend, das aus der Gruppe ausgewählt ist, die aus Alkan, Siloxan, einen Alkohol und einer aomatischen Verbindung als Siliconlösungsmittel besteht.

3. Gemisch nach einem der Ansprüche 1 und 2, bei dem das Silicon 0,02 bis 10 Gew.-% des Gesamtgewichts des Gemischs darstellt.

4. Gemisch nach Anspruch 3, bei dem das Silicon 0,04 bis 1 Gew.-% des Gesamtgewichts des Gemischs darstellt.

5. Gemisch nach Anspruch 3, bei dem das Silicon 0,1 bis 0,4 Gew.-% des Gesamtgewichts des Gemischs darstellt.

6. Gemisch nach Anspruch 1, darüber hinaus ein zusätzliches hydrofluoriertes Lösungsmittel umfassend.

## Claims

1. Hydrophobic mixture of i) a halogenated hydrofluoroether ether dispersing agent selected from the group made up of one fully halogenated molecule and one partly halogenated molecule with at least one atom of hydrogen, and ii) a silicone copolymer with a hydrophile function, for drying solids by displacement of water, the silicone copolymer being a modified polydimethyl siloxane, polyalkylene oxide with the formula: 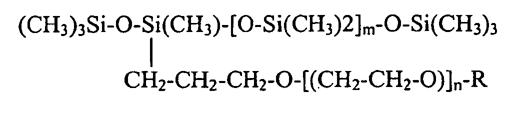 in which 0 ≤m ≤100,
4 ≤n ≤50 and
R being a radical chosen from the group of radicals made up of a hydrogen atom, an alcohol group, an amine group and a polyalkyl group containing 1 to 5 carbon atoms.

2. Mixture according to Claim 1, containing in addition a co-solvent chosen from the group made up of alkane, siloxane, an alcohol and an aromatic as solvent of the silicone.

3. Mixture according to one of the Claims 1 and 2, in which the silicone represents 0.02 to 10% by weight of the total mixture.

4. Mixture according to Claim 3, in which the silicone represents 0.04 to 1% by weight of the total mixture.

5. Mixture according to Claim 3, in which the silicone represents 0.1 to 0.4% by weight of the total mixture.

6. Mixture according to Claim 1, containing in addition a hydrofluoric co-solvent.
